(19)

Europäisches
Patentamt
European
Patent Office
Office européen
des brevets

(11) EP 2 966 748 A1

(12) EUROPEAN PATENT APPLICATION
published in accordance with Art. 153(4) EPC

(43) Date of publication:
13.01.2016 Bulletin 2016/02

(51) Int Cl.:
H02J 3/46 (2006.01)          F24H 1/00 (2006.01)
G06Q 50/06 (2012.01)

(21) Application number: 13824085.8

(22) Date of filing: 09.12.2013

(86) International application number:
PCT/JP2013/082978

(87) International publication number:
WO 2014/136341 (12.09.2014 Gazette 2014/37)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 07.03.2013  JP 2013045471

(71) Applicant: Kabushiki Kaisha Toshiba
Minato-ku
Tokyo 105-8001 (JP)

(72) Inventors:
• TANIMOTO, Tomohiko
  Tokyo 105-8001 (JP)
• KATAYAMA, Kyosuke
  Tokyo 105-8001 (JP)

• KUBOTA, Kazuto
  Tokyo 105-8001 (JP)
• MATSUE, Kiyotaka
  Tokyo 105-8001 (JP)
• WADA, Takahisa
  Tokyo 105-8001 (JP)
• SUYAMA, Akihiro
  Tokyo 105-8001 (JP)
• TAIRA, Hiroshi
  Tokyo 105-8001 (JP)

(74) Representative: Moreland, David et al
Marks & Clerk LLP
Aurora
120 Bothwell Street
Glasgow G2 7JS (GB)

(54) ENERGY MANAGEMENT SYSTEM, ENERGY MANAGEMENT METHOD, PROGRAM, AND SERVER

(57) According to an embodiment, energy management system manages energy of customer, including water heater uses renewable energy as heat source. Energy management system includes acquisition unit, estimator, creator and controller. Acquisition unit acquires data concerning energy associated apparatuses including water heater, power generator, battery and energy consuming device from customer. Estimator estimates energy demand and supply of customer based on the data. Creator creates operation schedules based on the estimated demand and supply so as to minimize energy cost of customer under a condition that surplus power to be discarded when the battery is fully charged is minimized. Controller controls energy associated apparatuses based on the operation schedules.

FIG. 3

Printed by Jouve, 75001 PARIS (FR)

**Description**

Technical Field

Embodiments described herein relate generally to an energy management system for managing the energy balance on a customer side, an energy management method, a program, and a server.

Background Art

A zero energy home (ZEH) or a net zero energy home has received a great deal of attention against the background of recently increasing awareness of environmental preservation and anxiety about shortages in the supply of electricity. A net zero energy home is a home with an annual primary energy consumption of almost zero. To implement a home of this type, distributed power supplies such as a PV (Photovoltaic power generation) system, a storage battery, and an FC (Fuel Cell) and a HEMS (Home Energy Management System) are indispensable.

Of the distributed power supplies, FC is most promising because it can stably generate power and supply heat energy using waste heat any time during the day or night, independently of the weather. However, regarding contractual agreements with electric power companies, reverse power flow from the FC to a commercial power grid is not permitted. Hence, several techniques of preventing reverse flow of power generated by the FC have been proposed.

Citation List

Patent Literatures

Patent Literature 1: Jpn. Pat. Appln. KOKAI Publication No. 2009-296097

Patent Literature 2:Jpn. Pat. Appln. KOKAI Publication No. 2002-48005

Patent Literature 3: Jpn. Pat. Appln. KOKAI Publication No. 2010-273407

Patent Literature 4: Jpn. Pat. Appln. KOKAI Publication No. 2011-181377

Patent Literature 5:Jpn. Pat. Appln. KOKAI Publication No. 2005-304118

Patent Literature 6: Jpn. Pat. Appln. KOKAI Publication No. 2012-115003

Summary of Invention

Technical Problem

As a measure to prevent the reverse power flow, there exists a technique of causing a dummy load or a heater to consume surplus power generated by the FC. However, the energy is wastefully consumed. There is also a technique of charging a storage battery with surplus power. In this case, however, it may be impossible to charge the storage battery when the necessity of charge has arisen because of the fully charged condition of the storage battery.

Even when both the heater and the storage battery are used together, a long time is necessary to change the output of the FC. For this reason, if a period of small power demand continues for a long time, the surplus power generation amount exceeds the storage battery capacity. In such a case, the operation of the FC needs to be stopped, or the heater needs to consume the surplus power. Today, it is a reality that generated surplus power is wastefully consumed even if the reverse power flow is prevented by disconnecting the FC from the grid by a relay.

On the other hand, when the heat source of solar heat, geothermal heat, or the like is effectively used, a cost merit may be obtained by selling surplus power to the grid. There is no known technique for suppressing wasteful consumption of surplus power that makes direct use of such as thermal energy.

It is an object to provide an energy management system capable of preventing surplus power from being wastefully consumed, an energy management method, a program, and a server.

Solution to Problem

According to an aspect, an energy management system manages energy of a customer, including a water heater that uses renewable energy as a heat source. The energy management system includes an acquisition unit, an estimation unit, a creation unit, and a control unit. The acquisition unit acquires data concerning energy associated apparatuses including the water heater, a power generation device, a battery device, and an energy consuming device from the customer. The estimation unit estimates an energy demand and supply of the customer based on the data. The creation unit creates operation schedules based on the estimated demand and supply so as to minimize the energy cost of the customer under a condition that surplus power to be discarded when the battery device is fully charged is minimized. The control unit controls the energy associated apparatuses based on the operation schedules. Brief Description of Drawings

[FIG. 1] FIG. 1 is a view showing an example of a system according to an embodiment.
[FIG. 2] FIG. 2 is a view showing an example of an energy management system according to the embodiment.
[FIG. 3] FIG. 3 is a functional block diagram showing the main part of a HEMS according to the first embodiment.
[FIG. 4] FIG. 4 is a view for explaining a control target model 300g according to the first embodiment.
[FIG. 5] FIG. 5 is a flowchart showing an example of a processing procedure according to the first embodiment.
[FIG. 6] FIG. 6 is a conceptual view showing an example of the gene design of a genetic algorithm according to the first embodiment.
[FIG. 7] FIG. 7 is a flowchart showing an example of the procedure of an optimization operation according to the first embodiment.
[FIG. 8] FIG. 8 is a graph for explaining an effect obtained by the first embodiment.
[FIG. 9] FIG. 9 is a functional block diagram showing the main part of a HEMS according to the second embodiment.
[FIG. 10] FIG. 10 is a view for explaining a control target model 300g according to the second embodiment. Description of Embodiments

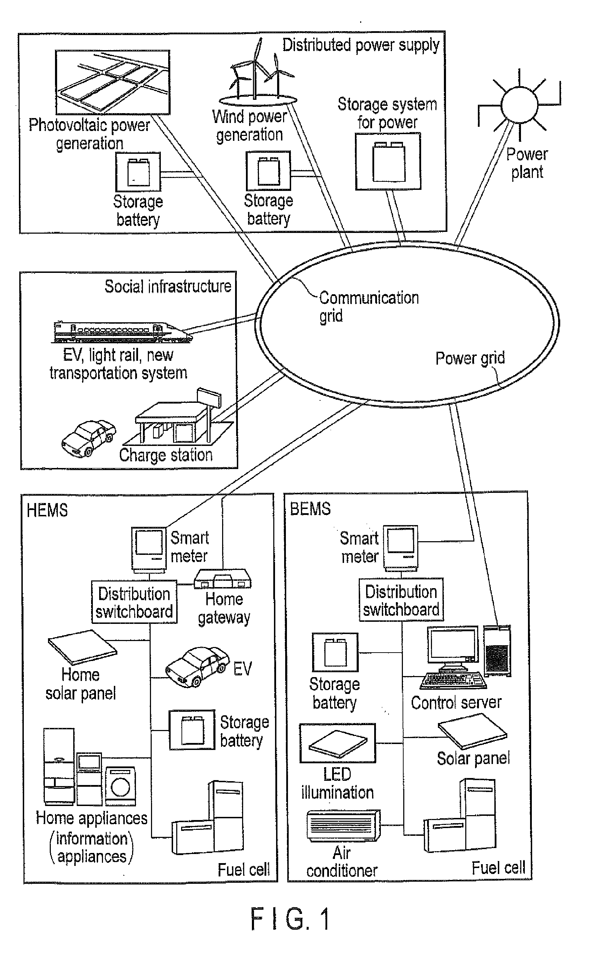

FIG. 1 is a view showing an example of a system according to an embodiment. FIG. 1 illustrates an example of a system known as a so-called smart grid. In an existing grid, existing power plants such as a nuclear power plant, a thermal power plant, and a hydroelectric power plant are connected to various customers such as an ordinary household, a building, and a factory via the grid. In the next-generation power grid, distributed power supplies such as a PV (Photovoltaic power generation) system and a wind power plant, battery devices, new transportation systems, charging stations, and the like are additionally connected to the power grid. The variety of elements can communicate via a communication grid.

Systems for managing energy are generically called EMSs (Energy Management Systems). EMSs are classified into several groups in accordance with the scale and the like. There are, for example, a HEMS for an ordinary household and a BEMS (Building Energy Management System) for a building. There also exist a MEMS (Mansion Energy Management System) for an apartment house, a CEMS (Community Energy Management System) for a community, and a FEMS (Factory Energy Management System) for a factory. Good energy optimization control is implemented by causing these systems to cooperate.

According to these systems, an advanced cooperative operation can be performed between the existing power plants, the distributed power supplies, the renewable energy sources such as sunlight and wind, and the customers. This makes it possible to produce a power supply service in a new and smart form, such as an energy supply system mainly using renewable energy or a customer participating-type energy supply/demand system by bidirectional cooperation of customers and companies.

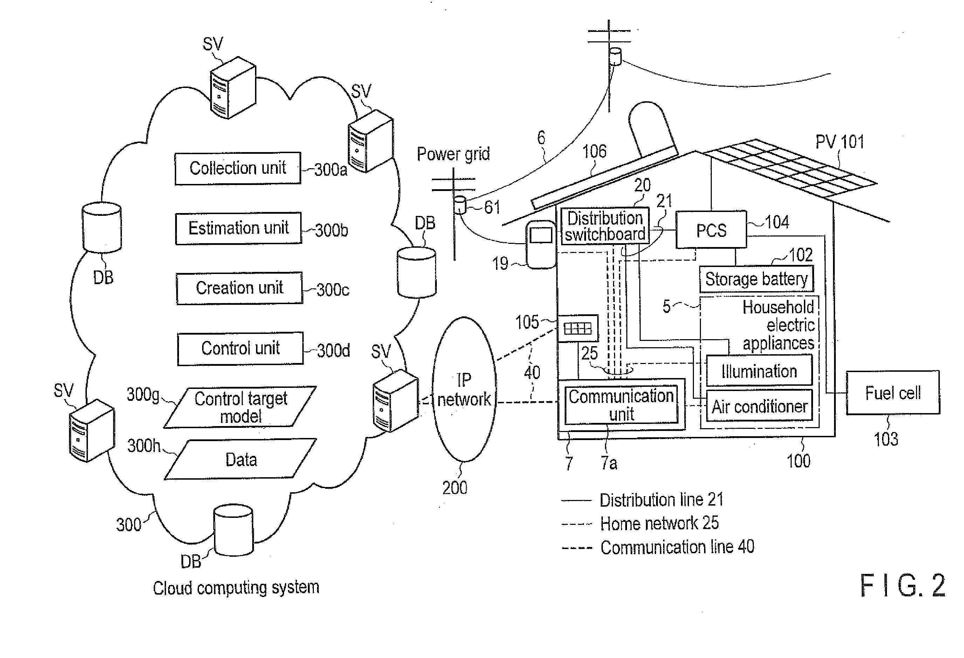

FIG. 2 is a view showing an example of an energy management system according to the embodiment. The HEMS includes a client system, and a cloud computing system (to be abbreviated as a cloud hereinafter) 300. The cloud 300 can be understood as a server system capable of communicating with the client system.

The client system includes a home gateway (HGW) 7 serving as a client apparatus. The home gateway 7 is a communication apparatus installed in a home 100, and can receive various kinds of services from the cloud 300.

The cloud 300 includes a server computer SV and a database DB. The server computer SV can include a single or a plurality of server computers. The databases DB can be either provided in the single server computer SV or distributively stored in the plurality of server computers SV.

Referring to FIG. 2, power (AC voltage) supplied from a power grid 6 is distributed to households via, for example, a transformer 61 on a pole, and supplied to a distribution switchboard 20 in the home 100 via a watt-hour meter (smart meter) 19. The watt-hour meter 19 has a function of measuring the power generation amount of an energy generation device provided in the home 100, the power consumption of the home 100, the electric energy supplied from the power grid 6, the amount of reverse power flow to the power grid 6, or the like. As is known, power generated based on renewable energy is permitted to flow back to the power grid 6.

The distribution switchboard 20 supplies, via distribution lines 21, power to household electric appliances (for example, lighting equipment, air conditioner, and heat pump water heater (HP)) 5 and a power conditioning system (PCS) 104 connected to the distribution switchboard 20. The distribution switchboard 20 also includes a measuring device for measuring the electric energy of each feeder.

The home 100 includes electrical apparatuses. The electrical apparatuses are apparatuses connectable to the distribution lines 21 in the home 100. An apparatus (load) that consumes power, an apparatus that generates power, an apparatus that consumes and generates power, and a storage battery correspond to the electrical apparatuses. That is, the household electric appliances 5, a PV unit 101, a storage battery 102, and a fuel cell (to be referred to as an FC unit hereinafter) 103 correspond to the electrical apparatuses. The electrical apparatuses are detachably connected to the distribution lines 21 via sockets (not shown) and then connected to the distribution switchboard 20 via the distribution lines 21.

The PV unit 101 is installed on the roof or wall of the home 100. The PV unit 101 is an energy generation apparatus that produces electric energy from renewable energy. A wind power generation system or the like also belongs to the category of energy generation apparatuses.

The FC unit 103 is a power generation unit for producing power from city gas or LP gas (liquefied propane gas) that is nonrenewable energy. Since the power generated by the FC unit 103 is prohibited from flowing back to the power grid 6, surplus power may occur. The surplus power can charge the storage battery 102.

The PCS 104 includes an inverter (not shown). The PCS 104 converts DC power supplied from the PV unit 101, the storage battery 102, or the FC unit 103 into AC power and supplies it to the distribution lines 21. The electrical apparatuses can thus receive power supplied from the storage battery 102 and the FC unit 103 via the PCS 104. The PCS 104 also includes a converter (not shown). The PCS 104 converts AC power from the distribution lines 21 into DC power and supplies it to the storage battery 102.

That is, the PCS 104 has the function of a power converter configured to transfer energy between the distribution lines 21 and the storage battery 102 and the FC unit 103. The PCS 104 also has a function of controlling to stably operate the storage battery 102 and the FC unit 103. Note that FIG. 2 illustrates a form in which the PCS 104 is commonly connected to the PV unit 101, the storage battery 102, and the FC unit 103. In place of this form, the PV 101, the storage battery 102, and the FC unit 103 may individually have the function of the PCS.

In addition, a solar water heater 106 is installed on the roof of the home 100. The solar water heater 106 is an energy generation device that generates hot water using, as the heat source, solar heat that is renewable energy. The generated hot water is supplied to a hot water supply line (not shown) of the home 100. To optimize the energy balance of the home 100, thermal energy obtained by the solar water heater 106 can be used.

A home network 25 such as a LAN (Local Area Network) is formed in the home 100. The home gateway 7 is detachably connected to both the home network 25 and an IP network 200 via a connector (not shown) or the like. The home gateway 7 can thus communicate with the watt-hour meter 19, the distribution switchboard 20, the PCS 104, and the household electric appliances 5 connected to the home network 25. Note that the home network 25 is either wireless or wired.

The home gateway 7 includes a communication unit 7a as a processing function according to the embodiment. The communication unit 7a is a network interface that transmits various kinds of data to the cloud 300 and receives various kinds of data from the cloud 300.

The home gateway 7 is a computer including a CPU (Central Processing Unit) and a memory (neither are shown). The memory stores programs configured to control the computer. The programs include instructions to communicate with the cloud 300, request the cloud 300 to calculate the operation schedules of the household electric appliances 5, the storage battery 102, and the FC unit 103, and reflect a customer's intention on system control. The CPU functions based on various kinds of programs, thereby implementing various functions of the home gateway 7.

That is, the home gateway 7 transmits various kinds of data to the cloud 300 and receives various kinds of data from the cloud 300. The home gateway 7 is a client capable of communicating with the cloud 300 and the server computer SV. Various kinds of data transmitted from the home gateway 7 include request signals to request the cloud 300 to do various kinds of operations.

The home gateway 7 is connected to a terminal 105 via a wired or wireless network. The functions of a local server can also be implemented by the home gateway 7 and the terminal 105. The terminal 105 can be, for example, a general-purpose portable information device, personal computer, or tablet terminal as well as a so-called touch panel.

The terminal 105 notifies the customer (user) of the operation state and power consumption of each of the household electric appliances 5, the PV unit 101, the storage battery 102, and the FC unit 103 by, for example, displaying them on an LCD (Liquid Crystal Display) or using voice guidance. The terminal 105 includes an operation panel and accepts various kinds of operations and settings input by the customer.

The IP network 200 is, for example, the so-called Internet or a VPN (Virtual Private Network) of a system vendor. The home gateway 7 can communicate with the server computer SV or send/receive data to/from the database DB via the IP network 200. Note that the IP network 200 can include a wireless or wired communication infrastructure to form a bidirectional communication environment between the home gateway 7 and the cloud 300.

The cloud 300 includes a collection unit 300a, an estimation unit 300b, a creation unit 300c, and a control unit 300d. The database DB of the cloud 300 stores a control target model 300g of the storage battery 102, the FC unit 103, and the solar water heater 106, and various kinds of data 300h. The collection unit 300a, the estimation unit 300b, the creation unit 300c, and the control unit 300d are functional objects distributively arranged in the single server computer SV or the cloud 300. How to implement these functional objects in the system can easily be understood by those skilled in the art.

For example, the collection unit 300a, the estimation unit 300b, the creation unit 300c, and the control unit 300d are implemented as programs to be executed by the server computer SV of the cloud 300. The programs can be executed by either a single computer or a system including a plurality of computers. When the commands described in the programs are executed, various functions according to the embodiment are implemented.

The collection unit 300a periodically or aperiodically acquires data concerning devices, that is, energy associated apparatuses such as the household electric appliances 5, the PV unit 101, the storage battery 102, and the FC unit 103, and the solar water heater 106 of the home 100 from the home gateway 7 of the home 100. The collection unit 300a also acquires, from the terminal 105, the user's operation history and the like of the terminal 105. Note that the collection unit 300a and the terminal 105 can also directly communicate via a communication line 40.

The acquired data are held in the database DB as the data 300h. The data 300h include the power demand of each home 100, the power consumption of each household electric appliance 5, a hot water supply, an operation state, the charged battery level and the amount of charged/discharged power of the storage battery 102, and the power generation amount of the PV unit 101. Meteorological data or the like provided by the Meteorological Agency can also be included in the data 300h.

The estimation unit 300b estimates the energy demand in the home 100 based on the data 300h acquired by the collection unit 300a. The energy demand is, for example, a power demand or a hot water demand. The estimation unit 300b estimates the energy supply of the home 100 based on the data 300h. The energy supply includes the power generation amounts (power base) of the PV unit 101 and the FC unit 103. The energy supply may also include the hot water supply calorie-based from the solar water heater 106.

The creation unit 300c creates the operation schedules of the storage battery 102 and the FC unit 103 based on the control target model 300g, the estimated energy demand, and the energy supply. That is, the creation unit 300c calculates, for example, the charge and discharge schedule of the storage battery 102 or the power generation schedule (FC power generation schedule) of the FC unit 103 based on, for example, the power demand, hot water demand, hot water supply, and PV power generation amount.

That is, the creation unit 300c decides the operation schedules of the storage battery 102 and the FC unit 103 so as to optimize the energy balance in the home 100. This processing is called optimal scheduling. The energy balance is, for example, the heat/electricity balance. The energy balance is evaluated by the balance between the cost of electric energy consumed by the household electric appliances 5 and the sales price of energy mainly generated by the PV unit 101. In the embodiment, thermal energy supplied from the solar water heater 106 is also assumed to be used. The calculated time-series operation schedules of the storage battery 102 and the FC unit 103 are stored in the database DB.

The control unit 300d controls the energy associated apparatuses based on the calculated operation schedules. More specifically, the control unit 300d generates control information used to control the storage battery 102 and the FC unit 103. That is, the control unit 300d generates an operation designation and a stop designation, output target values, and the like for charging and discharging and the operation of the storage battery 102 or power generation of the FC unit 103 based on the result of optimal scheduling. These pieces of control information are transmitted to the terminal 105 or the home gateway 7 via the communication line 40.

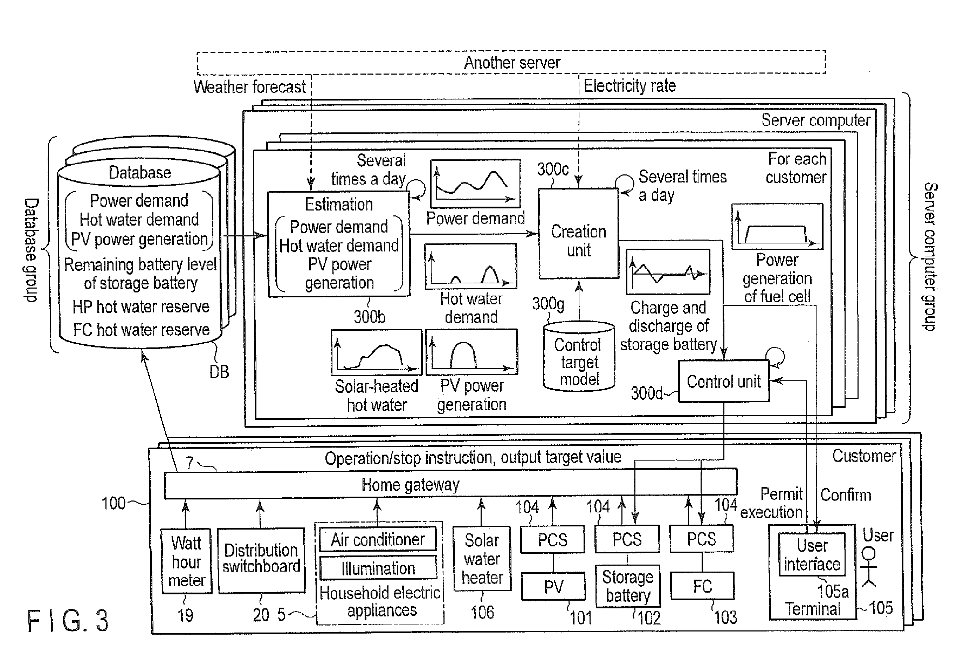

The terminal 105 of the home 100 includes an interface unit (user interface 105a shown in FIG. 3) configured to reflect the customer's intention on control of the household electric appliances 5 based on the control information transmitted from the control unit 300d. The user interface 105a includes a display device to display the charge and discharge schedule of the storage battery 102 or the power generation schedule of the FC unit 103. The user can see the contents displayed on the display device and confirm the schedule or select permission or rejection of execution of the displayed schedule. The user's intention can thus be reflected on schedule execution.

The customer can also input, via the user interface 105a, a designation (command) to request the cloud 300 to recalculate the schedule or give the system information necessary for the recalculation. A plurality of embodiments will be described below based on the above-described arrangement.

[First Embodiment]

FIG. 3 is a functional block diagram showing the main part of a HEMS according to the first embodiment. Referring to FIG. 3, various kinds of data are periodically or aperiodically transmitted from a PCS 104, electrical apparatuses 5, a storage battery 102, an FC unit 103, a watt-hour meter 19, and a distribution switchboard 20 of a home 100 to a cloud 300 via a home gateway 7. The data can include, for example, the power consumption and the operation state of each of the household electric appliances 5 for every predetermined time, the remaining battery level and the charged and discharged power amounts of the storage battery 102, and the power demand, hot water demand, PV power generation amount, and solar-heated water amount (the amount of hot water supplied by a solar water heater 106) of the home 100.

If an actual value is larger or smaller than a value set via a user interface 105a by the customer, the home gateway 7 transmits associated data to the cloud 300. "Aperiodic" means transmission at such a timing. The operation history of the user of a terminal 105, and the like are also transmitted to the cloud 300. Those data and information are stored in the group of databases DB.

An estimation unit 300b provided for each customer estimates the power demand, hot water demand, and PV power generation amount for every predetermined time of a day of interest using collected data of the power demand, hot water demand, and PV power generation amount and meteorological data such as a weather forecast. The meteorological data is distributed from another server (for example, Meteorological Agency) at several timings a day. The estimation calculation may be executed in synchronism with the timing of meteorological data reception.

The demand can be estimated from meteorological information and past demand data using a neural network (disclosed in Jpn. Pat. Appln. KOKAI Publication No. 06-276681), or estimated by grouping the past demand data of a plurality of customers and forming the average demand variation model of each group (disclosed in Jpn. Pat. Appln. KOKAI Publication No. 2004-112869).

The hot water demand is estimated from, for example, a calendar (disclosed in Jpn. Pat. Appln. KOKAI Publication No. 2011-83084). The PV power generation amount can be estimated based on the statistical correlation between different times in past data or the statistical correlation between different installation positions (disclosed inJpn. Pat. Appln. KOKAI Publication No. 2011-200040). The solar-heated hot water can also be estimated by the same method as described above.

A creation unit 300c provided for each customer executes optimal scheduling concerning operation control of the household electric appliances 5 based on the energy demand, energy supply, energy unit price, control target model 300g, and the like for every predetermined time, calculated by estimation calculation.

The estimation unit 300b and the creation unit 300c can be implemented as, for example, functional objects dedicated to each customer. That is, the functions of the estimation unit 300b and the creation unit 300c can be provided for each customer. Such a form can be obtained by, for example, creating a plurality of threads in the program execution process. This form is advantageous because, for example, security can easily be retained.

Alternatively, the estimation unit 300b and the creation unit 300c can be implemented as functional objects provided for a plurality of customers. That is, the operations by the estimation unit 300b and the creation unit 300c can be executed for a group of a plurality of customers. This form is advantageous because, for example, the calculation resource can be saved.

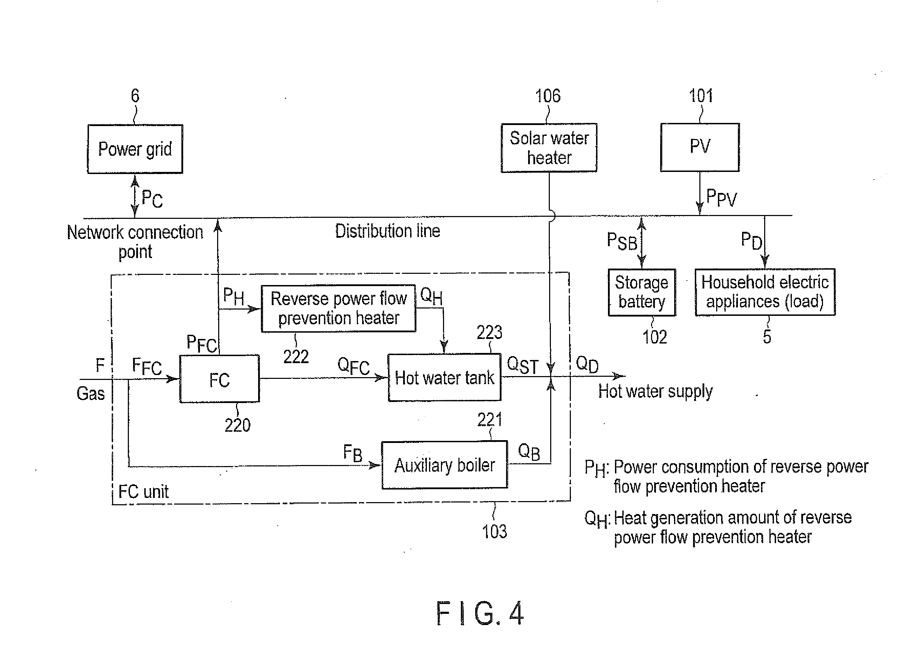

FIG. 4 is a block diagram for explaining the control target model 300g according to the first embodiment. The control target model 300g includes a power grid 6, the FC unit 103, the solar water heater 106, the storage battery 102, a PV unit 101, and a load (household electric appliance) 205 as elements. The FC unit 103 includes an FC main body 220, an auxiliary boiler 221, a reverse power flow prevention heater 222, and a hot water tank 223 as elements. The variables in FIG. 4 are shown below.

[Mathematical 1]

| | |
|---|---|
| $t$: | Time [h] |
| $P_C(t)$: | Electricity purchased from power grid [kW] (negative value indicates sold electricity) |
| $P_{FC}(t)$: | FC power generation amount [kW] |
| $P_H(t)$: | Power consumption of reverse power flow prevention heater [kW] |
| $P_{PV}(t)$: | PV power generation amount [kW] |
| $P_D(t)$: | Power demand in home [kW] |
| $P_{SB}(t)$: | Charged power of storage battery [kW] (negative value indicates discharged power) |
| $Q_D(t)$: | Hot water demand [kcal/h] |
| $Q_{FC}(t)$: | FC exhaust heat amount [kcal/h] |
| $Q_{ST}(t)$: | Hot water supply from hot water tank [kcal/h] |
| $Q_B(t)$: | Hot water supply from auxiliary boiler [kcal/h] |
| $Q_H(t)$: | Heat generation amount of reverse power flow prevention heater [kcal/h] |
| $Q_S(t)$: | Hot water amount by solar heat |
| $F(t)$: | Gas supply [kcal/h] |

$F_{FC}(t)$:     Gas supply to FC [kcal/h]

$F_B(t)$:     Gas supply to auxiliary boiler [kcal/h]

$S(t)$:     Remaining battery level of storage battery [kWh]

$H(t)$:     Hot water reserve of hot water tank [kcal]

The control target model 300g represents the input/output relationship between the elements and the relational expressions of the input variables or output variables between the elements. For example, the control target model 300g can be expressed by equations (1) to (11).

[Mathematical 2]

$$F(t) = F_{FC}(t) + F_B(t) \qquad \cdots (1)$$

$$P_{FC}(t) = a F_{FC}(t) + b \qquad \cdots (2)$$

$$Q_{FC}(t) = \alpha F_{FC}(t) + \beta \qquad \cdots (3)$$

$a, b, \alpha, \beta$: Coefficients determined from efficiency of FC

$$r\, H(t-1) + Q_{FC}(t) + Q_H(t) = H(t) + Q_{ST}(t) \qquad \cdots (4)$$

$r$: Hot water storage efficiency

$$H_{min} \leqq H(t) \leqq H_{max} \qquad \cdots (5)$$

$H_{min}$, $H_{max}$ : Constraints of capacity of hot water tank

$$P_C(t) + P_{PV}(t) + P_{FC}(t) + P_{SB}(t) = P_D(t) + P_H(t) \qquad \cdots (6)$$

$$P_{FC}(t) + P_{SB}(t) \leqq P_D(t) + P_H(t) \qquad \cdots (7)$$

$$P_H(t) \leqq P_{FC}(t) \qquad \cdots (8)$$

$$S_{min} \leqq S(t) \leqq S_{max} \qquad \cdots (9)$$

$S_{min}$, $S_{max}$ : Constraints of capacity of storage battery

$$-P_{FC\_DOWN} \leqq P_{FC}(t) - P_{FC}(t-1) \leqq P_{FC\_UP} \qquad \cdots (10)$$

$P_{FC\_UP}$ [kW/h]: Upper limit of increasing speed of FC power generation amount $P_{FC\_DOWN}$ [kW/h]: Upper limit of decreasing speed of FC power generation amount

$$Q_D(t) = Q_{ST}(t) + Q_B(t) + Q_S(t) \qquad \cdots (11)$$

In equation (1), a gas supply $F(t)$ is indicated as the sum of a supply $F_{FC}(t)$ to the FC and a supply $F_B(t)$ to the auxiliary boiler. The FC main body 220 is assumed to generate power in an amount $P_{FC}(t)$ with respect to the gas supply $F_{FC}(t)$ and exhausts heat in an amount $Q_{FC}(t)$. The input and output characteristics of the FC main body 220 can approximately be expressed by equations (2) and (3). That is, the input and output characteristics of the FC main body 220 are represented by the relationship between the gas supply, the power generation amount, and the exhaust heat amount of the FC main body 220.

The reverse power flow prevention heater 222 converts surplus power $P_H(t)$ into heat in an amount $Q_H(t)$ so as to consume it. That is, the reverse power flow prevention heater 222 discards the heat in the amount $Q_H(t)$, thereby preventing the surplus power from flowing back to the power grid 6. The auxiliary boiler 221 supplies hot water in an amount $Q_B(t)$ to cover the shortfall in a hot water supply $Q_{ST}(t)$ from the hot water tank 223 out of the hot water demand.

As indicated by equation (4), a hot water reserve $H(t)$ of the hot water tank 223 increases/decreases in accordance with the exhaust heat $Q_{FC}(t)$ of the FC main body 220, the heat generation amount $Q_H(t)$ of the reverse power flow prevention heater 222, and the hot water supply $Q_{ST}(t)$. The left-hand side of equation (4) represents the heat amount to the hot water tank 223 on a hot water quantity basis. The first term of the left-hand side is $r \cdot H(t - 1)$ = residual ratio $\times$ previous hot water reserve = hot water quantity remaining after heat dissipation. A hot water storage efficiency (residual ratio) r is a coefficient representing the ratio of heat remaining after a decrease by heat dissipation from time $(t - 1)$ to time t.

The second term of the left-hand side of equation (4) represents the FC waste heat collection amount. The third term represents the heat generation amount of the reverse power flow prevention heater. Both the second and third terms are represented by equivalent hot water demand quantities. Note that if the hot water supply line for the solar water heater 106 is connected to the hot water tank 223, $Q_S(t)$ is added to the left-hand side of equation (4), and $Q_S(t)$ of the right-hand side of equation (11) to be described later is eliminated.

The right-hand side of equation (4) represents the heat amount from the hot water tank 223 and the remaining heat amount on a hot water quantity basis. The first term of the right-hand side represents the hot water reserve of this time, the second term represents the hot water supply of this time (strictly, the hot water supply from time $(t - 1)$ to time t). Inequality (5) represents the constraint of the capacity of the hot water tank 223.

The storage battery 102 can be expressed as a model that increases/decreases a remaining battery level $S(t)$ based on charged/discharged power $P_{SB}(t)$. Equation (6) represents the power demand and supply balance. $P_D(t)$ is the power demand of the home 100, $P_C(t)$ is the purchased or sold electricity, and $P_{PV}(t)$ is the power generation amount of the PV unit 101. Inequalities (7) and (8) represent constraints that the reverse power flow from the FC main body 220 and the storage battery 102 is prohibited. Inequality (9) represents the constraint of the capacity of the storage battery 102.

Inequality (10) represents the constraint that the change in the power generation amount of the FC unit 103 (FC main body 220) with respect to the time is limited within a predetermined range. That is, inequality (10) represents the constraint that the change amount of the power generation amount of the FC main body 220 during the period from the given time $(t - 1)$ to the next time t is limited between $-P_{FC\_DOWN}$ that is the lower limit of the decreasing speed of the FC power generation amount and $P_{FC\_UP}$ that is the upper limit of the increasing speed of the FC power generation amount.

Note that a hot water demand $QD(t)$ is covered by the hot water supply $Q_{ST}(t)$ from the hot water tank 223, the hot water supply $Q_B(t)$ from the auxiliary boiler, and the hot water supply $Q_S(t)$ from the solar water heater 106, as shown in equation (11).

The creation unit 300c (FIGS. 2 and 3) creates the schedule of the power generation $P_{FC}(t)$ of the FC unit 103 and the schedule of the charge and discharge $P_{SB}(t)$ of the storage battery 102 based on the power demand, hot water demand, PV power generation amount, hot water amount from the solar water heater 106, unit prices of electricity and gas, and purchase price of electricity. Each schedule is created by, for example, an optimization algorithm such that the heat/electricity balance (energy cost) is minimized under a constraint that surplus power discarded when the storage battery 102 is fully charged is minimized. As the optimization algorithm, for example, a genetic algorithm is usable. The function of the above-described arrangement will be described next.

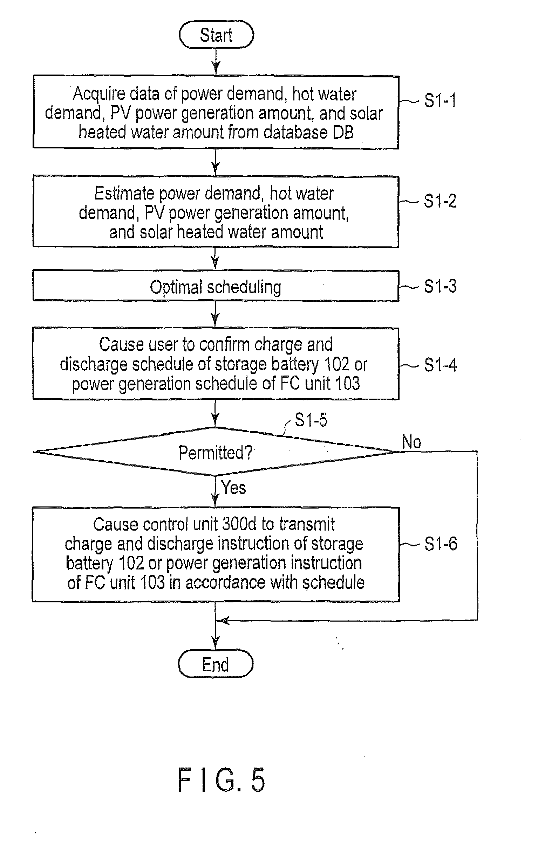

FIG. 5 is a flowchart showing an example of a processing procedure according to the first embodiment. An estimated power demand, estimated hot water demand, estimated PV power generation amount, and the like are necessary for the optimization operation. The optimization operation is executed in synchronism with the timings of estimation calculation which is executed several times a day.

Referring to FIG. 5, the estimation unit 300b acquires data of the power demand, hot water demand, PV power generation amount, and solar-heated water amount for every predetermined time from a database DB (step S1-1). In this step, past data, for example, data of the same day of a year earlier may be acquired in addition to the current data. Next, the estimation unit 300b estimates the power demand, hot water demand, PV power generation amount, and solar-heated water amount for every predetermined time to calculate the operation schedule (step S1-2).

The creation unit 300c calculates the schedule of the power generation amount of the FC unit 103 and the schedule of the charge and discharge amount of the storage battery 102 for every predetermined time so as to minimize the heat/electricity balance (step S1-3). The calculated schedules are stored in the database DB.

Next, the system transmits a message signal representing the schedule of the charge and discharge amount of the storage battery 102 or the schedule of the power generation amount of the FC unit 103 to a terminal 105 via an IP network 200. The terminal 105 interprets the message signal and displays the various schedules on the interface (step S1-4). The routine from the message signal transmission to the display is executed periodically or in response to a request from the user.

The cloud 300 waits for arrival of a permission message signal representing that execution of the operation schedule is permitted by the user (step S1-5). When the execution is permitted, the control unit 300d transmits control information used to control the household electric appliances 5 of the home 100 in accordance with the schedule (created by the creation unit 300c) to the home gateway 7 of the home 100 via the IP network 200 (step S1-6).

The control information includes, for example, operation/stop designation, an output target value, and the like for charge and discharge of the storage battery 102 and power generation of the FC unit 103. The above-described procedure is repeated at the time interval of optimal scheduling. The generated control information is transmitted to the home gateway 7 of the home 100.

The user instructs the system via the user interface 105a to perform or not perform control based on the generated control information. The user interface 105a also displays the current state of the solar water heater 106 or estimated status data. The temperature of hot water reserve, volume, heat amount, values equivalent to fuel or power necessary for generation, or the use amount thereof may also be displayed.

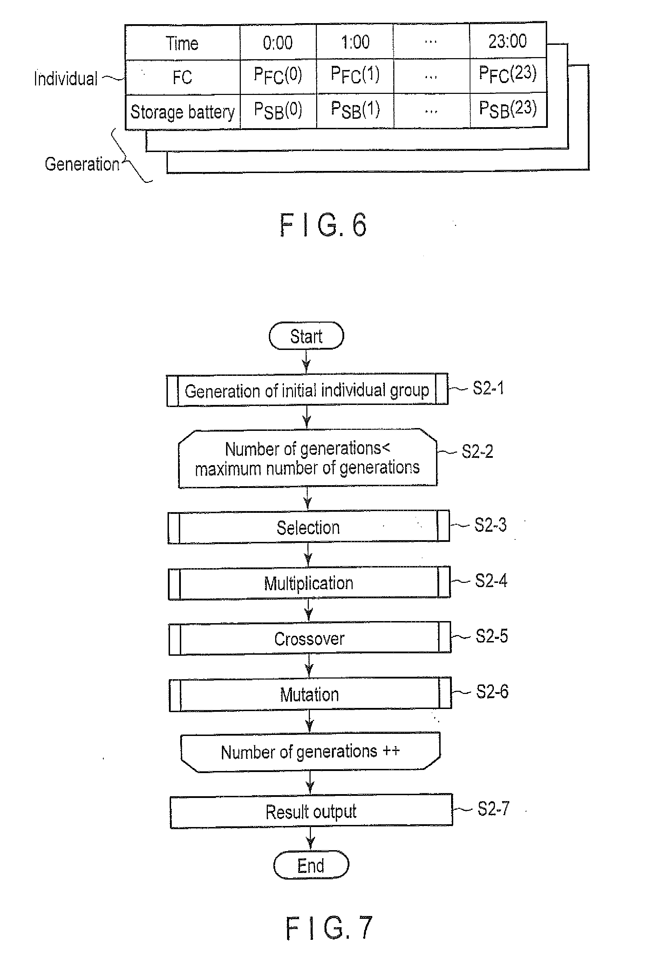

FIG. 6 is a conceptual view showing an example of the gene design of a genetic algorithm according to the first embodiment. In the first embodiment, the power generation amount $P_{FC}(t)$ of the FC unit 103 and the charged/discharged power $P_{SB}(t)$ of the storage battery 102 are incorporated into genes. The operation schedules of the storage battery 102 and the FC unit 103 of a day are defined as individuals, and a generation includes a plurality of individuals.

Equation (12) represents a fitness Fit to be maximized. The operation schedule can be calculated by performing optimization using Fit as an objective function. Equation (13) represents a heat/electricity balance C. Equation (14) represents a cost g $(P_{FC}, P_{SB})$ of discontinuity of device operation. The sum from t = 0 to t = 23 in the heat/electricity balance C is equivalent to obtaining the sum in 24 hrs.

[Mathematical 3]

$$\mathrm{Fit} = \frac{1}{f(C) + g(P_{FC}(t), P_{SB}(t))} \qquad \cdots (12)$$

f(C):Monotone increasing function having C as variable >0

$$C = \sum_{t=0}^{23} \left( c_F F(t) + c_E(t) P_C(t) \right) \qquad \cdots (13)$$

$$c_E(t): \begin{cases} \text{Unit price of electricity [yen/kWh]} & P_C(t) > 0 \\ \\ \text{Unit price of PV sales [yen/kWh]} & P_C(t) \leqq 0 \end{cases}$$

$c_F$ : Unit price of gas [yen/kcal]

$$g(P_{FC}(t), P_{SB}(t)) = w_1 |P_{FC}(t) - P_{FC}(t-1)| + w_2 |P_{SB}(t) - P_{SB}(t-1)|$$

$$w_1, w_2 : \text{Weights}$$

$$\cdots (14)$$

The fitness Fit represented by equation (12) is the reciprocal of the sum of a monotone increasing function f(C) using the heat/electricity balance C per day as a variable and the cost g($P_{FC}$, $P_{SB}$) of discontinuity of device operation. The heat/electricity balance C may be negative when the PV power generation amount largely exceeds the power demand of the home 100. Hence, to make the decrease in the heat/electricity balance C correspond to the increase in the fitness Fit, the form of equation (12) is employed. In the first embodiment, the function f(C) > 0 is used.

The power demand, hot water demand, PV power generation amount, solar water heating amount, unit price of electricity, unit price of gas, and PV purchase price are inserted into the above-described equations, and gene manipulations such as mutation, crossover, and selection are repeated to maximize Fit. It is possible to obtain, by these operations, a series of power generation amounts $P_{FC}(t)$ of the FC unit 103 and a series of charged/discharged powers $P_{SB}(t)$ of the storage battery 102, which can maximize the heat/electricity balance C.

FIG. 7 is a flowchart showing an example of the procedure of the optimization operation according to the first embodiment. A genetic algorithm will be exemplified as the optimization algorithm. The processing procedure based on the genetic algorithm will be described below.

(Step S2-1) Generation of Initial Individual Group

In this step, the calculation unit 300c generates n initial individuals. The genes of the individuals are, for example, the operation/stop of the FC unit 103, the power generation amount of the FC unit 103, and the charged/discharged power of the storage battery 102 at a time t. Gene sequences corresponding to, for example, one day (24 hrs) can be provided. Each individual is a set of gene sequences of the FC unit 103 and the storage battery 102. The bits of the genes of each individual that does not meet the constraints are inverted, thereby modifying the individual to meet the constraints.

(Step S2-2)

The loop of step S2-2 indicates processing of repeating the processes of steps S2-3 to S2-6. When this loop is repeated a predetermined number of times, the algorithm operation ends. In addition, the fitness of each individual and the average fitness of the generation are calculated. The average fitness of the generation is compared with the average fitness of two previous generations. If the comparison result is equal to or smaller than an arbitrarily set value ε, the algorithm operation ends.

In this step, the calculation unit 300c discards individuals that do not meet the constraints. Hence, the individuals that do not meet the constraints are selected. If there are a predetermined number of individuals or more, individuals whose fitness is poor (low) are discarded to maintain the number of individuals below the predetermined number.

(Step S2-4) Multiplication

In this step, if the number of individuals is smaller than a predefined number of individuals, the calculation unit 300c multiplies an individual having the best fitness.

(Step S2-5) Crossover

The calculation unit 300c performs pairing at random. The pairing is performed in accordance with the percentage (crossover rate) to the total number of individuals. A gene locus is selected at random for each pair, and one-point crossover is performed.

(Step S2-6) Mutation

In this step, the calculation unit 300c randomly selects individuals of a predetermined percentage (mutation rate) of the total number of individuals and inverts the bits of the genes of arbitrary (randomly decided) gene loci of each individual.

The procedure of (step S2-3) to (step S2-6) is repeated until a condition given by number of generations < maximum number of generations is met while incrementing the number of generations (loop of step S2-2). If this condition is met, the calculation unit 300c outputs the result (step S2-7), and ends the calculation procedure.

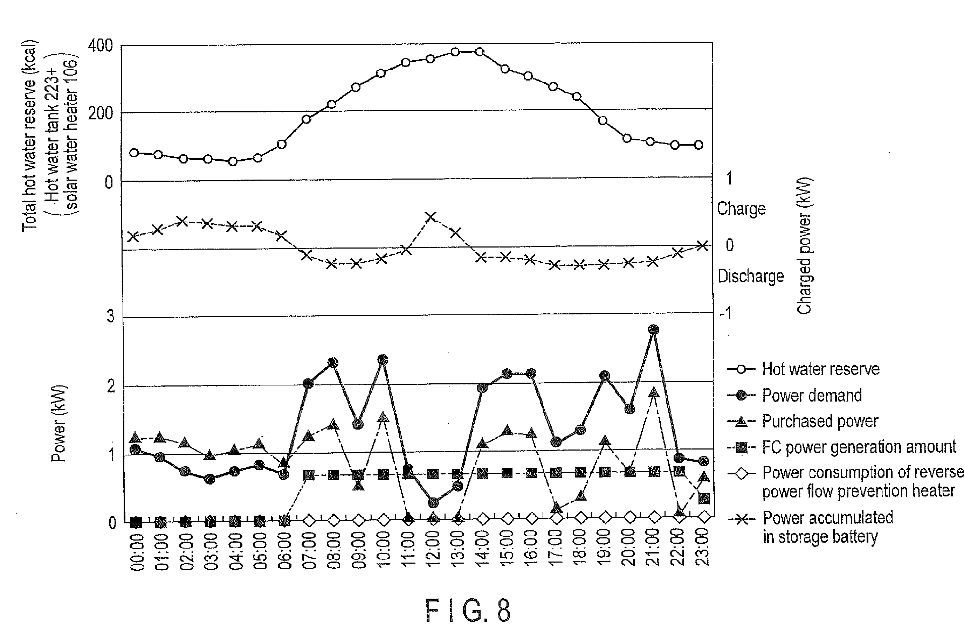

FIG. 8 is a graph for explaining an effect obtained by the first embodiment. FIG. 8 shows examples of the one-day operation schedules of the storage battery 102 and the FC unit 103 which are calculated based on the estimation results of the power demand and hot water demand of one day in the home 100. The unit prices of electricity for day and night are assumed, and the unit price of electricity is assumed to be 28 yen/kWh from 7:00 to 23:00 and 9 yen/kWh from 23:00 to 7:00 of the next day. FIG. 8 does not assume improvement of the heat/electricity balance by electricity selling, and illustrates the calculation results obtained using only the power demand, hot water demand, and unit prices of electricity and gas.

The operation schedule of the storage battery 102 defines to perform charge in a time zone where the unit price of electricity is low (0:00 to 6:00) and perform discharge in time zones where the unit price of electricity is high (7:00 to 10:00 and 13:00 to 22:00). Since purchased electricity in the time zones where the unit price of electricity is high decreases, the electricity bill can be reduced.

The FC unit 103 is operated to the maximum output. In a time zone where the power generation amount exceeds the power demand (12:00 to 14:00), the surplus power is accumulated in the storage battery 102. It is therefore possible to prevent generated power from wastefully being consumed (discarded) by the reverse power flow prevention heater 222 and reduce the gas bill as well. The reverse power flow prevention heater 222 remains inoperative for 24 hrs, as can be understood.

FIG. 8 also shows a graph representing the transition of the total hot water reserve at every time on a calorie basis. This graph shows the sum of the amount of hot water of, for example, 45° or more in the hot water tank 223 and the amount of hot water of the same temperature pooled in the solar water heater 106. This graph basically indicates the same diurnal variation as that of the PV power generation amount, but changes depending on the operation state of the FC unit 103 and the change in the hot water demand as well.

As described above, according to the first embodiment, the PV power generation amount, power demand, hot water demand, and solar-heated water amount in the home 100 are estimated. Optimization calculation of minimizing the evaluation function under preset constraints is executed, thereby performing energy management to minimize the energy cost (heat and electricity cost). That is, the operation schedule of the FC unit 103 and the charge and discharge schedule of the storage battery 102 are optimized based on the control model that changes the power generation amount of the FC unit 103 and incorporates the solar-heated water amount. This makes it possible to create a schedule that reduces the heat and electricity cost without making the reverse power flow prevention heater 222 wastefully operate.

As indicated by equations (12) and (13), the function representing the fitness Fit to be maximized includes the gas rate necessary for the operation of the FC unit 103. Hence, a schedule that wastefully operates the reverse power flow prevention heater 222 is selected in the process of optimization calculation under a condition that a feasible solution exists.

In addition, as indicated by inequality (10), a constraint that the change in the power generation amount of the FC unit 103 from the given time (t - 1) to the next time t is limited within the range of $-P_{FC\_DOWN}$ (the lower limit of the decreasing speed of the power generation amount of the FC unit 103) and $P_{FC\_UP}$ (the upper limit of the increasing speed of the power generation amount of the FC unit 103) is provided. This makes it possible to create a power generation schedule that does not cause the change amount of the power generation amount of the FC unit 103 to exceed the capability to track the power demand. That is, with this constraint, the power generation schedule of the FC unit 103 can be created within the range of the capability to track the power demand. That is, the FC unit 103 can be operated in accordance with the power generation schedule created by the HEMS.

In particular, when the estimation procedure of step S1-2 and the optimal scheduling of step S1-3 (FIG. 5) are combined, it is possible to create a demand/supply plan such as the power generation schedule of the FC unit 103 or the charge and discharge schedule of the storage battery 102 in consideration of the overall balance in accordance with the estimated power demand, estimated hot water demand, estimated PV power generation amount, and estimated solar-heated water amount during a relatively long period corresponding to about one day.

It is therefore possible to avoid a case in which the storage battery 102 is fully charged, and the surplus power of the FC unit 103 cannot be supplied or a case in which the remaining battery level is too low when the storage battery 102 should be discharged.

As described above, according to the first embodiment, surplus power that cannot flow back to the commercial power grid can effectively be used without being wastefully consumed. It is therefore possible to provide an energy management system capable of preventing surplus power from being wastefully consumed, an energy management method, a program, and a server.

[Second Embodiment]

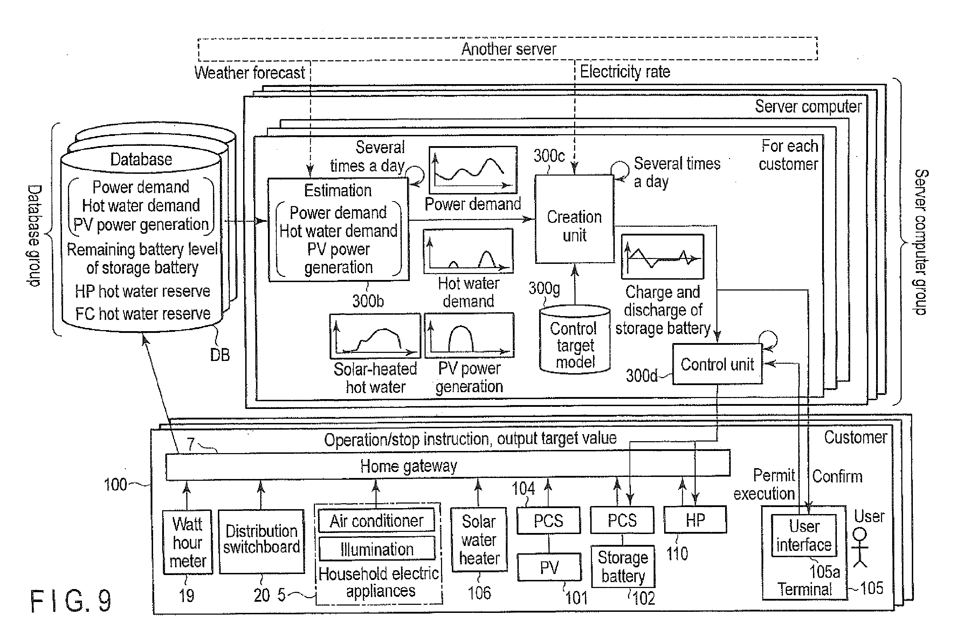

FIG. 9 is a functional block diagram showing the main part of a HEMS according to the second embodiment. The same reference numerals as in FIG. 3 denote the same parts in FIG. 9, and only different parts will be described here. The second embodiment assumes a case in which a heat pump water heater (HP) 110 that uses geothermal energy is used in place of the FC unit 103. The heat pump water heater 110 is controlled by a control unit 300d based on an optimized operation schedule.

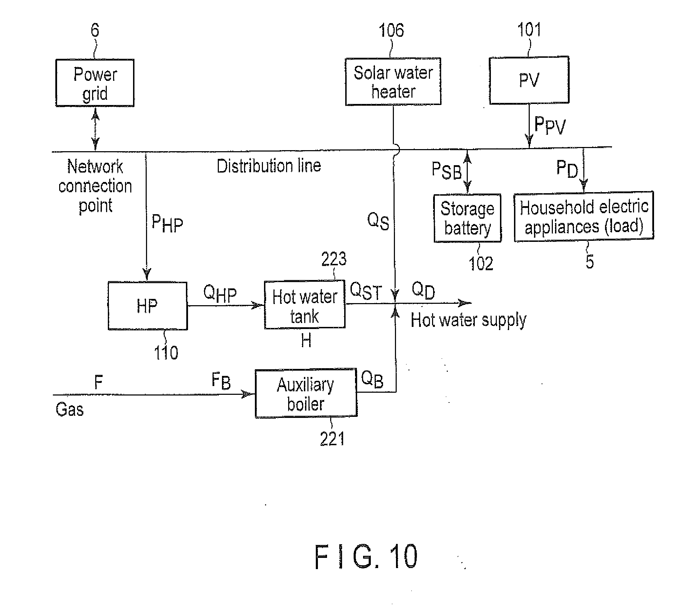

FIG. 10 is a view for explaining a control target model 300g according to the second embodiment. As compared to FIG. 4, the heat pump water heater 110 replaces the FC main body 220. Since the heat pump water heater 110 has an excellent control response as compared to the FC unit 103, the reverse power flow prevention heater 222 can be removed. Expressions (15) to (22) represent the relationships between variables in FIG. 10.

[Mathematical 4]

$$F(t) = F_B(t) \qquad \cdots (15)$$

$$Q_{HP}(t) = \gamma P_{HP}(t) \qquad \cdots (16)$$

$\gamma$: Coefficients determined from performance of HP

$$r\ H(t-1) + Q_{HP}(t) + Q_H(t) = H(t) + Q_{ST}(t) \qquad \cdots (17)$$

r: Hot water storage efficiency

$$H_{min} \leqq H(t) \leqq H_{max} \qquad \cdots (18)$$

$H_{min}, H_{max}$ : Constraints of capacity of hot water tank

$$P_C(t) + P_{PV}(t) + P_{FC}(t) + P_{SB}(t) = P_D(t) + P_H(t) + P_{HP}(t) \qquad \cdots (19)$$

$$P_{SB}(t) \leqq P_D(t) + P_H(t) + P_{HP}(t) \qquad \cdots (20)$$

$$S_{min} \leqq S(t) \leqq S_{max} \qquad \cdots (21)$$

$S_{min}, S_{max}$ : Constraints of capacity of storage battery

$$Q_D(t) = Q_{ST}(t) + Q_B(t) + Q_S(t) \qquad \cdots (22)$$

New variables $P_{HP}(t)$ and $Q_{HP}(t)$ are as follows.
[Mathematical 5]

$P_{HP}(t)$ :     Power consumption of HP [kW]
$Q_{HP}(t)$ :     Waste heat amount of HP [kW]

When the control target model shown in FIG. 10 is used, and optimization is executed using the above-described variables as in the first embodiment, an operation schedule can be calculated. Details are the same as in the first embodiment, and a description thereof will be omitted to avoid cumbersomeness.

In the second embodiment, the heat pump water heater 110 is incorporated in the optimization calculation. That is, a creation unit 300c executes optimization calculation to minimize the evaluation function based on the estimated power demand, estimated hot water demand in a home 100 and geothermal energy, thereby creating an operation schedule. According to the second embodiment, since the fuel of the FC unit 103 is unnecessary, a larger cost merit can be obtained.

Note that the present invention is not limited to the above-described embodiments. For example, in the embodiments, use of a genetic algorithm has been described. However, the genetic algorithm is not the only solution to calculate an operation schedule. An optimum operation schedule can be calculated using various other algorithms.

In the embodiments, a case in which hot water is directly supplied from the solar water heater to the hot water supply line has been described. However, the present invention is not limited to this, and a water supply route to supply hot water from the solar water heater to the heat pump water heater may be provided. This arrangement is advantageous in winter or in cold climate areas where the insolation is small.

In addition, heat may be collected from water left in the bathtub using a heat exchanger and used to heat hot water from the solar water heater or hot water from the heat pump water heater. That is, the home 100 may be provided with a heat exchanger that exchanges thermal energy between hot water supplied from the water heater and hot water in the bathtub. In this case, the creation unit 300c creates an operation schedule based on the estimated energy demand, energy supply, and thermal energy.

Furthermore, a user interface 105a may display external information about heat balance such as solar heat energy and geothermal energy. This allows a user who often pays attention to only electric energy to be aware of the thermal energy.

While certain embodiments of the invention have been described, these embodiments have been presented by way of example only, and are not intended to limit the scope of the inventions. Indeed, the novel methods and systems described herein may be embodied in a variety of other forms; furthermore, various omissions, substitutions and changes may be made without departing from the spirit of the invention. The accompanying claims and their equivalents are intended to cover the embodiments and modifications thereof as would fall within the scope and spirit of the inventions.

**Claims**

1. An energy management system for managing energy of a customer, including a water heater that uses renewable energy as a heat source, **characterized by** comprising:

   an acquisition unit configured to acquire data concerning energy associated apparatuses including the water heater, a power generation device, a battery device, and an energy consuming device from the customer;
   an estimation unit configured to estimate an energy demand and an energy supply of the customer based on the acquired data;
   a creation unit configured to create an operation schedule of each of the energy associated apparatuses based on the estimated energy demand and energy supply so as to minimize an energy cost of the customer under a condition that surplus power to be discarded when the battery device is fully charged is minimized; and
   a control unit configured to control the energy associated apparatuses based on the created operation schedules.

2. The energy management system according to claim 1, **characterized in that** the creation unit creates the operation schedule based on a control target model of the customer including the water heater.

3. The energy management system according to claim 2, **characterized in that** the control target model further includes at least one of a power grid, a fuel cell, an auxiliary boiler, a reverse power flow prevention heater, the battery device, and a hot water tank, and
   the creation unit creates the operation schedule by optimizing an objective function including a variable concerning the control target model.

4. The energy management system according to claim 3, **characterized in that** the objective function includes an electricity rate, a gas rate, and a purchase price of electricity as the variables.

5. The energy management system according to any one of claims 3 and 4, **characterized in that** the creation unit optimizes the objective function by a genetic algorithm.

6. The energy management system according to claim 1, **characterized in that** the power generation device comprises a fuel cell, and
   the creation unit creates the operation schedule under a condition that a change in a power generation amount of the fuel cell with respect to a time is limited within a predetermined range.

7. The energy management system according to claim 1, **characterized in that** when the customer includes a heat exchanger configured to exchange thermal energy between hot water supplied from the water heater and hot water in a bathtub,
   the creation unit creates the operation schedule based on the estimated energy demand and energy supply and the thermal energy.

8. The energy management system according to claim 1, **characterized in that** the water heater comprises a heat pump water heater using geothermal energy, and
   the creation unit creates the operation schedule based on the estimated energy demand and energy supply and the geothermal energy.

9. The energy management system according to claim 1, **characterized by** further comprising an interface unit configured to reflect user's intention on the operation schedule.

**10.** The energy management system according to claim 1, **characterized in that** at least one of the acquisition unit, the estimation unit, the creation unit, and the control unit is a functional object arranged in a cloud computing system.

**11.** An energy management method of managing energy of a customer including a water heater that uses renewable energy as a heat source, **characterized by** comprising:

acquiring data concerning energy associated apparatuses including the water heater, a power generation device, a battery device, and an energy consuming device from the customer;
estimating an energy demand and an energy supply of the customer based on the acquired data;
creating an operation schedule of each of the energy associated apparatuses based on the estimated energy demand and energy supply so as to minimize an energy cost of the customer under a condition that surplus power to be discarded when the battery device is fully charged is minimized; and
controlling the energy associated apparatuses based on the created operation schedules.

**12.** The energy management method according to claim 11, **characterized in that** the operation schedule is created based on a control target model of the customer including the water heater.

**13.** The energy management method according to claim 12, **characterized in that** the control target model further includes at least one of a power grid, a fuel cell, an auxiliary boiler, a reverse power flow prevention heater, the battery device, and a hot water tank, and
the operation schedule is created by optimizing an objective function including a variable concerning the control target model.

**14.** The energy management method according to claim 13, **characterized in that** the objective function includes an electricity rate, a gas rate, and a purchase price of electricity as the variables.

**15.** The energy management method according to any one of claims 13 and 14, **characterized in that** the objective function is optimized by a genetic algorithm.

**16.** The energy management method according to claim 11, **characterized in that** the power generation device comprises a fuel cell, and
the operation schedule is created under a condition that a change in a power generation amount of the fuel cell with respect to a time is limited within a predetermined range.

**17.** The energy management method according to claim 11, **characterized in that** when the customer includes a heat exchanger configured to exchange thermal energy between hot water supplied from the water heater and hot water in a bathtub, the operation schedule is created based on the estimated energy demand and energy supply and the thermal energy.

**18.** The energy management method according to claim 11, **characterized in that** the water heater comprises a heat pump water heater using geothermal energy, and
the operation schedule is created based on the estimated energy demand and energy supply and the geothermal energy.

**19.** A program **characterized by** including an instruction that causes a computer to execute a method defined in any one of claims 11 to 18.

**20.** A server capable of communicating with a client apparatus of a customer, including a water heater that uses renewable energy as a heat source, **characterized by** comprising:

an acquisition unit configured to acquire data concerning energy associated apparatuses including the water heater, a power generation device, a battery device, and an energy consuming device from the client apparatus;
an estimation unit configured to estimate an energy demand and an energy supply of the customer based on the acquired data;
a creation unit configured to create an operation schedule of each of the energy associated apparatuses based on the estimated energy demand and energy supply so as to minimize an energy cost of the customer under a condition that surplus power to be discarded when the battery device is fully charged is minimized; and
a control unit configured to transmit, to the client apparatus, control information used to control the energy associated apparatuses based on the created operation schedules.

21. The server according to claim 20, **characterized in that** the creation unit creates the operation schedule based on a control target model of the customer including the water heater.

22. The server according to claim 21, **characterized in that** the control target model further includes at least one of a power grid, a fuel cell, an auxiliary boiler, a reverse power flow prevention heater, the battery device, and a hot water tank, and
the creation unit creates the operation schedule by optimizing an objective function including a variable concerning the control target model.

23. The server according to claim 22, **characterized in that** the creation unit optimizes the objective function by a genetic algorithm.

24. The server according to claim 20, **characterized in that** the power generation device comprises a fuel cell, and the creation unit creates the operation schedule under a condition that a change in a power generation amount of the fuel cell with respect to a time is limited within a predetermined range.

25. The server according to claim 20, **characterized in that** when the customer includes a heat exchanger configured to exchange thermal energy between hot water supplied from the water heater and hot water in a bathtub, the creation unit creates the operation schedule based on the estimated energy demand and energy supply and the thermal energy.

26. The server according to claim 20, **characterized in that** the water heater comprises a heat pump water heater using geothermal energy, and
the creation unit creates the operation schedule based on the estimated energy demand and energy supply and the geothermal energy.

FIG. 1

F I G. 2

FIG. 3

FIG. 4

EP 2 966 748 A1

```
        ┌──────────┐
        │  Start   │
        └────┬─────┘
             ▼
┌─────────────────────────────────────┐
│  Acquire data of power demand, hot   │ ~ S1-1
│ water demand, PV power generation    │
│ amount, and solar heated water       │
│ amount from database DB              │
└─────────────────┬───────────────────┘
                  ▼
┌─────────────────────────────────────┐
│   Estimate power demand, hot water   │ ~ S1-2
│  demand, PV power generation amount, │
│   and solar heated water amount      │
└─────────────────┬───────────────────┘
                  ▼
┌─────────────────────────────────────┐
│         Optimal scheduling           │ ~ S1-3
└─────────────────┬───────────────────┘
                  ▼
┌─────────────────────────────────────┐
│     Cause user to confirm charge     │ ~ S1-4
│  and discharge schedule of storage   │
│  battery 102 or power generation     │
│  schedule of FC unit 103             │
└─────────────────┬───────────────────┘
                  ▼
              S1-5
         ◇─────────────◇   No
         │  Permitted? │────────┐
         ◇─────────────◇        │
                │ Yes           │
                ▼               │
┌─────────────────────────────┐│
│ Cause control unit 300d to  ││ ~ S1-6
│ transmit charge and         ││
│ discharge instruction of    ││
│ storage battery 102 or      ││
│ power generation            ││
│ instruction of FC unit 103  ││
│ in accordance with schedule ││
└──────────────┬──────────────┘│
               ▼◄──────────────┘
        ┌──────────┐
        │   End    │
        └──────────┘
```

F I G. 5

| Time | 0:00 | 1:00 | ... | 23:00 |
|---|---|---|---|---|
| FC | $P_{FC}(0)$ | $P_{FC}(1)$ | ... | $P_{FC}(23)$ |
| Storage battery | $P_{SB}(0)$ | $P_{SB}(1)$ | ... | $P_{SB}(23)$ |

Individual

Generation

F I G. 6

Start

Generation of initial individual group — S2-1

Number of generations<
maximum number of generations — S2-2

Selection — S2-3

Multiplication — S2-4

Crossover — S2-5

Mutation — S2-6

Number of generations ++

Result output — S2-7

End

F I G. 7

FIG. 8

F I G. 9

F I G. 10

## INTERNATIONAL SEARCH REPORT

| International application No. |
|---|
| PCT/JP2013/082978 |

A.  CLASSIFICATION OF SUBJECT MATTER
*H02J3/46*(2006.01)i, *F24H1/00*(2006.01)i, *G06Q50/06*(2012.01)i

According to International Patent Classification (IPC) or to both national classification and IPC

B.  FIELDS SEARCHED

Minimum documentation searched (classification system followed by classification symbols)
H02J3/46, F24H1/00, G06Q50/06

Documentation searched other than minimum documentation to the extent that such documents are included in the fields searched
Jitsuyo Shinan Koho          1922–1996   Jitsuyo Shinan Toroku Koho   1996–2014
Kokai Jitsuyo Shinan Koho   1971–2014   Toroku Jitsuyo Shinan Koho   1994–2014

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| A | JP 2005-86953 A  (Nippon Telegraph and Telephone Corp.), 31 March 2005 (31.03.2005), entire text; all drawings (Family: none) | 1-26 |
| A | JP 2006-304402 A  (Nippon Telegraph and Telephone Corp.), 02 November 2006 (02.11.2006), entire text; all drawings (Family: none) | 1-26 |
| A | JP 2011-248643 A  (Osaka Gas Co., Ltd.), 08 December 2011 (08.12.2011), entire text; all drawings (Family: none) | 1-26 |

☐  Further documents are listed in the continuation of Box C.          ☐  See patent family annex.

| | |
|---|---|
| *     Special categories of cited documents: | "T"   later document published after the international filing date or priority date and not in conflict with the application but cited to understand the principle or theory underlying the invention |
| "A"   document defining the general state of the art which is not considered   to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| 13 February, 2014 (13.02.14) | 25 February, 2014 (25.02.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009296097 A
- JP 2002048005 A
- JP 2010273407 A
- JP 2011181377 A
- JP 2005304118 A
- JP 2012115003 A
- JP 2011200040 A